Europäisches Patentamt

European Patent Office

Office européen des brevets

(11) Publication number: **0 191 233**
**B1**

(12) **EUROPEAN PATENT SPECIFICATION**

(45) Date of publication of patent specification: **21.03.90**

(21) Application number: **85308979.5**

(22) Date of filing: **10.12.85**

(51) Int. Cl.⁵: **H 01 Q 1/32, H 04 B 7/08**

(54) Automobile antenna system.

(30) Priority: **12.12.84 JP 263272/84**
**29.01.85 JP 16116/85**

(43) Date of publication of application:
**20.08.86 Bulletin 86/34**

(45) Publication of the grant of the patent:
**21.03.90 Bulletin 90/12**

(84) Designated Contracting States:
**AT CH DE FR GB LI SE**

(56) References cited:
**DE-A-1 949 828**
**US-A-4 499 606**

**PATENT ABSTRACTS OF JAPAN, vol. 7, no. 162
(E-187)1307r, 15th July 1983; & JP - A - 58 70642**

**PATENT ABSTRACTS OF JAPAN, vol. 7, no. 162
(E-187)1307r, 15th July 1983; & JP - A - 58 70640**

**PATENT ABSTRACTS OF JAPAN, vol. 6, no. 37
(E-97)915r, 6th March 1982; & JP - A - 56 156 031**

(73) Proprietor: **TOYOTA JIDOSHA KABUSHIKI
KAISHA**
**1, Toyota-cho Toyota-shi
Aichi-ken 471 (JP)**

(72) Inventor: **Ohe, Junzo**
**15303 Daini-ekaku Apt. 2-56 Ekakushin-machi
Toyota Aichi (JP)**
Inventor: **Kondo, Hiroshi**
**6-49 Nitamata Onishi-cho
Okazaki Aichi (JP)**

(74) Representative: **Wood, Anthony Charles et al
Urquhart-Dykes & Lord 91 Wimpole Street
London W1M 8AH (GB)**

Courier Press, Leamington Spa, England.

## Description

The present invention relates to space diversity automobile antenna systems.

Antenna systems are indispensable to automobiles for positive reception of various broadcast wave signals to be supplied to various inboard receivers such as radios, televisions and telephones. Such antenna systems are also important for citizen band transceivers.

However, high-frequency signals in the VHF band such as FM broadcast signals have a strong tendency to propagate rectilinearly, so that direct signals and other signals involving reflection from buildings, mountains or other obstacles interfere with each other and cause multi-path noise such as distortion or momentary interruption of the detected signal. An automobile antenna system with a single antenna cannot reduce such multi-path noise which is produced at the time of reception of wave signals in a high-frequency band.

Furthermore, it is difficult to receive broadcast wave signals in a stable manner by a conventional pole antenna during the travel of an automobile, because, due to the directivity pattern of the antenna, its receiving state changes as the direction of travel of the automobile changes.

To solve this problem a diversity reception antenna system has been proposed, in which two spaced apart antennas are disposed on the vehicle body at predetermined locations so that reception is automatically taken over by the antenna which at any one time enjoys the superior reception, whereby the directivity of the antenna system is improved and the amount of multi-path noise is lowered.

However, a conventional antenna is generally a pole antenna which projects outwardly from the vehicle body, and although it exhibits good performance in its own way, it always remains a nuisance from the viewpoint of vehicle body design.

Furthermore, pole antennas are disadvantageous in that they are subject to damage, tampering and theft and also in that they generate noise during high-speed driving. For such reasons, there has long been a strong desire to eliminate the need for such pole antennas.

Especially when diversity reception is to be performed by an automobile antenna system, a plurality of antennas are required, as described above. Furthermore, the number of frequency bands for broadcast wave signals to be received within automobiles has increased, and thus a multiplicity of antennas have been required in accordance with the number of frequency bands. As a result, the aesthetic appearance of the automobile is adversely affected, and the reception performance greatly deteriorates due to electrical interference between the various antennas.

Accordingly, it is an object of the present invention to make it possible to provide an automobile antenna system which is capable of effective diversity reception without damaging the aesthetic appearance of the automobile, thereby mitigating the above-described problems.

JP—A—5870642; JP—A—5870640; and JP—A—56156031 each describe a space diversity automobile antenna system comprising:

a plurality of antenna means associated with the automobile to detect broadcast radio frequency signals, at a frequency above 50 MHz, and to provide output signals;

said plurality of antenna means including a windshield antenna; and

a diversity reception circuit operable in response to a change in the level of a said output signal to select one of said output signals for use.

The present invention is characterized in that:

said plurality of antenna means further includes a pair of pick-ups disposed nearer the end of the automobile body remote from the windshield antenna and disposed one toward each side of said body;

each said pick-up being mounted adjacent a structure forming a portion of said body to detect radio frequency surface currents induced in said structure by the broadcast radio frequency signals; and

each said pick-up comprising a casing having an opening and a loop antenna disposed within the casing with a side thereof exposed through said opening to extend closely adjacent to a predetermined surface portion of said structure along which said surface currents have a concentrated flow.

It will be appreciated that neither the windshield antenna nor the pair of pick-ups extend outwardly of the automobile body, and accordingly the aesthetic appearance of the automobile body is not adversely affected.

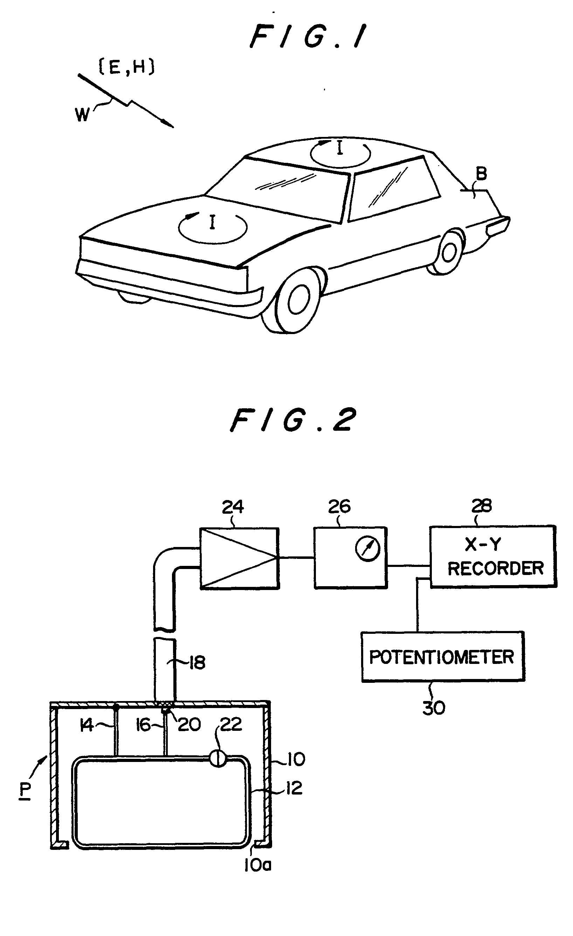

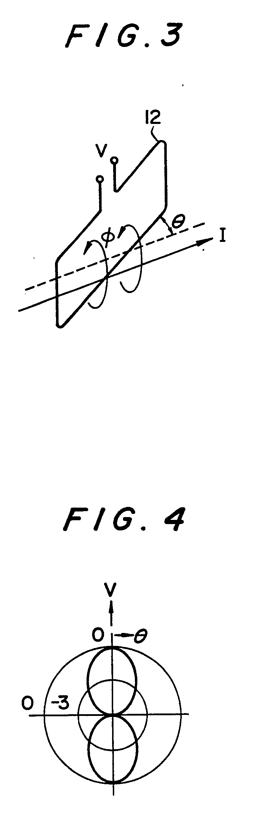

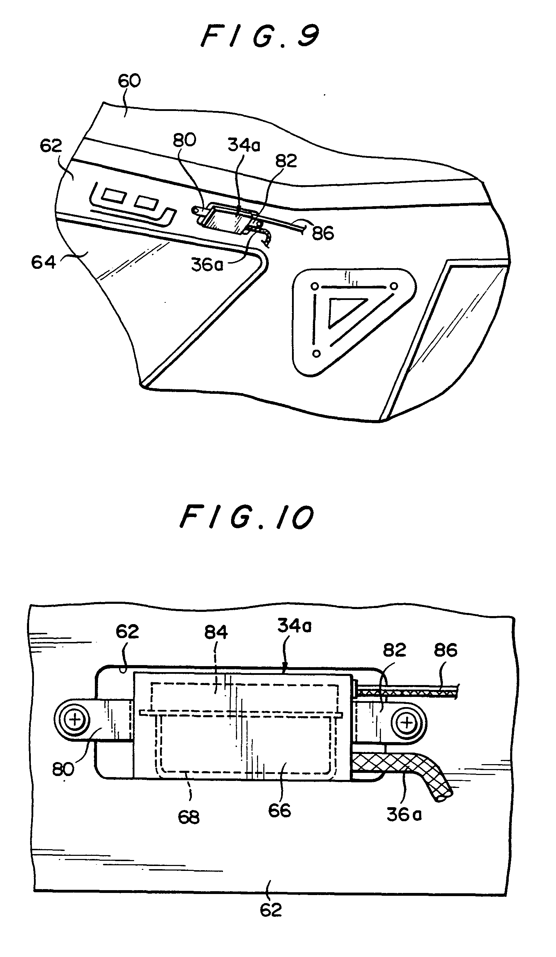

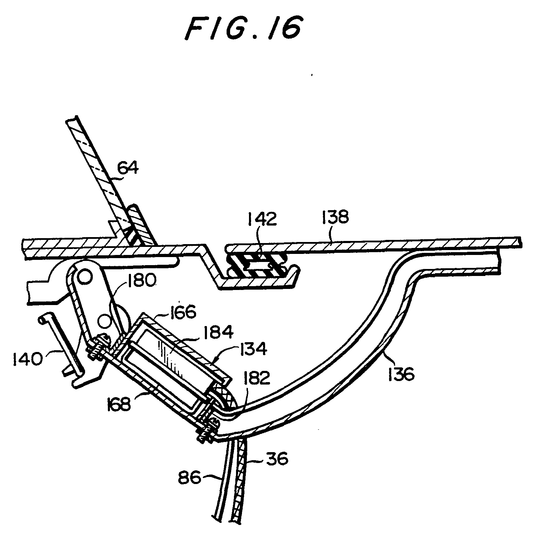

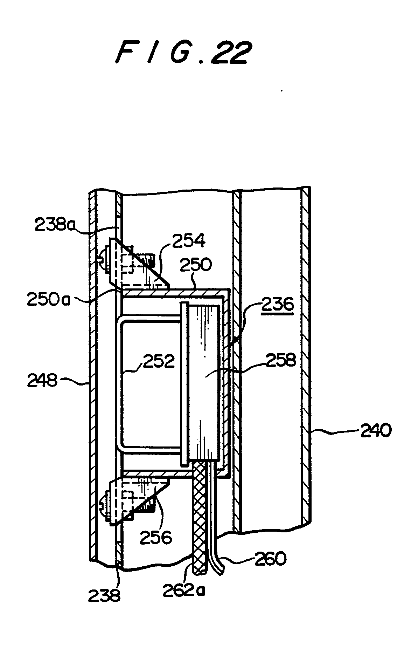

The structures shown in Figures 9 to 12 hereof are also shown in Figures 1 to 4 of our co-pending EP—A—181120; the structures shown in Figures 15 and 16 hereof are also shown in Figures 1 and 3 of our copending EP—A—187446; the structure is shown in Figure 18 hereof is also shown in Figure 1 of our co-pending EP—A—180462; and the structures shown in Figures 21 and 22 hereof are also shown in Figures 2 and 3 of our co-pending EP—A—182497.

Documents EP—A—181120; EP—A—187446; EP—A—180462; and EP—A—182497 are all documents of the type mentioned in Article 54(3) of the European Convention.

Embodiments of the present invention will now be described, by way of example, with reference to the accompanying drawings, in which:—

Fig. 1 illustrates surface currents I induced on a vehicle body B by external waves W;

Fig. 2 illustrates a probe for detecting the distribution of surface currents on the vehicle body and having the same construction as that of a high-frequency pick-up used in the present invention, and a circuit for processing signals from the probe;

Fig. 3 illustrates electromagnetic coupling between the surface currents I and the pick-up loop antenna;

Fig. 4 illustrates the directional pattern of the loop antenna shown in Fig. 3;

Fig. 5 illustrates the intensity distribution of the surface currents;

Fig. 6 illustrates the directions of flow of the surface currents;

Fig. 7 is a schematic view of a first embodiment of an automobile antenna system according to the present invention;

Figs. 8(A) and 8(B) illustrate the directivities of the antennas in the embodiment shown in Fig. 7;

Figs. 9 and 12 are explanatory views of the high-frequency pickups of the first embodiment, mounted on a roof panel;

Fig. 13 is a schematic view of a second embodiment of an automobile antenna system according to the present invention;

Figs. 14 and 16 are explanatory views of the high-frequency pick-ups of the second embodiment, mounted on trunk hinges;

Figs. 17 and 18 are explanatory views of the high-frequency pick-ups of the second embodiment, mounted on the marginal edge portion of the trunk lid;

Fig. 19 is a schematic view of a third embodiment of an automobile antenna system according to the invention;

Fig. 20 is a schematic explanatory view of an arrangement of a front pillar within which a high-frequency pick-up of the third embodiment is installed;

Fig. 21 is a cross sectional view of the front pillar shown in Fig. 20, with the electromagnetic coupling type high-frequency pick-up mounted therein.

Fig. 22 is a fragmentary vertical sectional view of the front pillar shown in Fig. 21;

Fig. 23(A) illustrates the directivities of the high-frequency pick-ups disposed in the front pillars; and

Fig. 23(B) illustrates the directivity of the rear windshield antenna.

Preferred embodiments of an automobile antenna system according to the present invention will be described hereinunder with reference to the accompanying drawings.

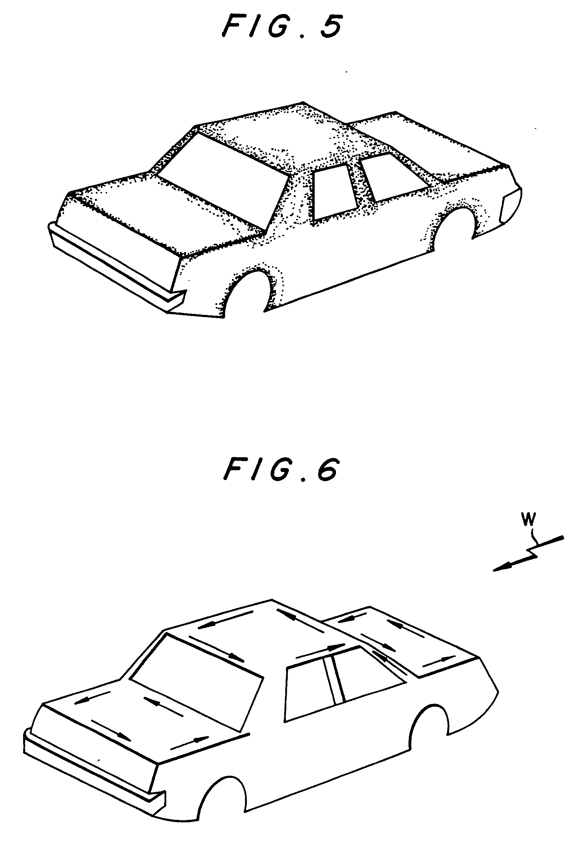

Figs. 1 and 6 illustrate a process for examining the distribution characteristics of high-frequency currents so as to ascertain the locations at which an antenna system can operate efficiently on the vehicle body of an automobile.

Fig. 1 shows that when external electromagnetic waves W, such as broadcast waves, pass through the vehicle body B of conductive metal, surface currents I are induced at various vehicle locations at levels corresponding to the intensities of electromagnetic waves passing therethrough. The present antenna system is intended for reception only of electromagnetic waves of relatively high frequency bands in excess of 50 MHz, such as FM broadcast wave signals.

The present invention can make use of a measurement of the distribution of the surface currents induced on the vehicle body by electromagnetic waves within the above-described particular wave bands so as to seek locations on the vehicle body which are higher in surface current density and lower in noise and at which pick-ups used in the present antenna system are to be located.

The distribution of surface currents is determined by a simulation using a computer and also by measuring actual intensities of surface currents at various locations on a vehicle body. The measurement is carried out by the use of a probe which can operate in accordance with the same principle as that of a high-frequency pick-up actually located on the vehicle body at a desired location, as will be described later. Such a probe is moved on the vehicle body over the entire surface thereof to measure the level of surface currents at various locations on the vehicle body.

Figure 2 shows an example of such a probe P which is constructed in accordance with substantially the same principle as that of a high-frequency pick-up described hereinafter. The probe P is composed of a casing 10 of electrically conductive material for preventing any external electromagnetic wave from propagating into the interior thereof, and a loop coil 12 fixed within the casing 10. The casing 10 includes an opening 10a formed therein through which a portion of the loop coil 12 is externally exposed. The exposed portion of the loop coil 12 is positioned in close proximity to the surface of the vehicle body B to detect magnetic flux induced by surface currents on the vehicle body B. Another portion of the loop coil 12 is connected to the casing 10 through a short-circuiting line 14. The loop coil 12 further includes an output end 16 connected to a core 20 in a coaxial cable 18. Still another portion of the loop coil 12 includes a capacitor 22 for causing the frequency in the loop coil 12 to resonate relative to the desired frequency to be measured to increase the efficiency of the pick-up.

Thus, when the probe P is moved along the surface of the vehicle body B and also angularly rotated at various locations of measurement, the distribution and direction of surface currents can accurately be determined at each of the locations. In Figure 2, the output of the probe P is amplified by a high-frequency voltage amplifier 24 and the resulting output voltage is measured by a high-frequency voltmeter 26. This coil output voltage is read at the indicated value of the high-frequency voltmeter 26 and also is recorded by an XY recorder 28 to provide the distribution of surface currents at various locations on the vehicle. The input of the XY recorder 28 receives signals indicative of various locations from a potentiometer 30 to associate the value of high-frequency surface currents with the corresponding location.

Fig. 3 illustrates an angle θ of deflection between the high-frequency surface currents I and the loop coil 12 of the pick-up. As is clear from the drawing, magnetic flux φ intersects the loop coil 12 to generate a detection voltage V in the loop coil 12. As shown in Figure 4, when the angle θ of deflection is equal to zero, that is, the surface currents I are parallel to the loop coil 12 of the pick-up, the maximum voltage can be obtained. The direction of the surface currents I when the probe P is rotated to obtain the maximum voltage can also be known.

Figs. 5 and 6 respectively show the magnitude and direction of high-frequency surface currents induced at various different locations on the vehicle body at a frequency of 80 MHz, the values of which are obtained from the measurements by the probe P and the simulation effected by the computer. As can be seen from Fig. 5, the distribution of surface currents has higher densities at the marginal portions of the vehicle body and lower densities at the central portions of the flat vehicle panels.

It will also be apparent from Fig. 6 that the surface currents are concentrated in the direction parallel to the marginal edge of the vehicle body and in the direction along the connections of various flat panels.

It is found that the computer's simulation and various experimental measurements that the distance between the position where a high-frequency pick-up is mounted and a marginal edge of the vehicle body, and the distance which is suitable for practical use, depends upon the carrier frequency used therein. It is also recognized that the distance decreases as the value of the carrier frequency is increased.

From the fact that the suitable distance of 4.5 cm from a corresponding marginal edge of the vehicle body is inversely proportional to the value of the carrier frequency, good results can be obtained relative to the respective values of the carrier frequency if a high-frequency pick-up is spaced away from a marginal edge of a vehicle body within a distance represented by the following formula:

$$12 \times 10^{-3} \; c/f(m)$$

where c=the velocity of light and f=carrier frequency.

It is found that the rear edge of the roof panel and the front edge of the trunk lid of the vehicle body are among the locations where surface currents have a concentrated flow.

First embodiment

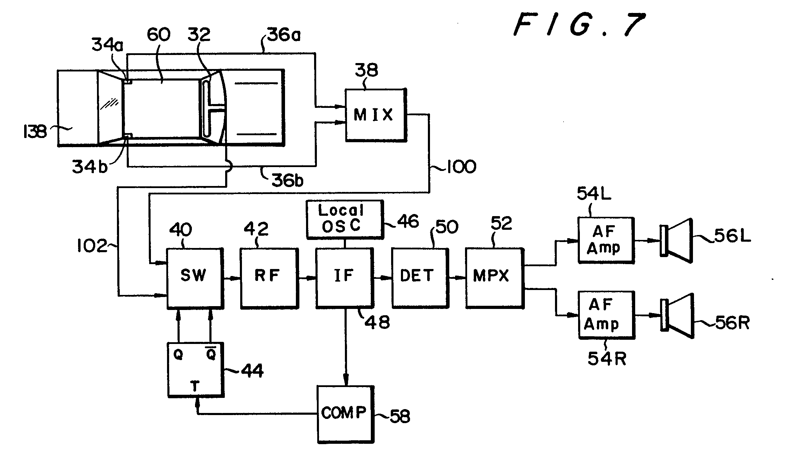

Fig. 7 shows a first embodiment of an antenna system according to the present invention.

In this embodiment a pair of high-frequency pick-ups 34a and 34b having a similar structure to that of the above-described probe are provided at the rear marginal edge portion of the roof panel of a vehicle, one said pick-up at each side, and a known front windshield antenna 32 is provided, the pick-ups 34a, 34b in combination with the antenna 32 constituting a space diversity reception antenna.

It is known that antennas for a space diversity reception system can ordinarily obtain space diversity effects which are sufficient for practical use if the distance between them is more than λ/4

to λ/2, wherein λ represents wavelength. It will be understood that, since the distance between the front windshield antenna 32 and the high-frequency pick-ups 34 is about 2 m in Fig. 7, and the wavelength of the FM broadcast waves is about 3.00 m, this embodiment provides a very effective space diversity reception antenna system for these FM bands.

The structure of a circuit by which the antenna enjoying better reception sensitivity at any one time is automatically selected, from between the front windshield antenna 32 and the pair of high-frequency pick-ups 34a, 34b, will be explained with reference to Fig 7.

In Fig. 7, coaxial cables 36a, 36b which supply the outputs of the high-frequency pick-ups 34a, 34b, respectively are connected to a mixer 38, which adds the outputs of the high-frequency pick-ups 34a, 34b together.

An output 100 obtained by adding the outputs of the pick-ups 34a, 34b together by the mixer 38 and an output 102 from the front windshield antenna 32 are supplied to a high-frequency amplifying circuit 42 through a switch circuit 40.

The switch circuit 40 is changed over in accordance with the output from a flip-flop circuit 44 which will be described later, so that either the output 102 of the antenna 32 or the output 100 obtained by adding the outputs of the pickups 34a, 34b together is selectively supplied to the high-frequency amplifying circuit 42, and is introduced to an intermediate frequency amplifying circuit 48 to which a local oscillator 46 is connected. As a result, an intermediate frequency signal alone is fed to a detecting circuit 50.

Thereafter, the signal (in the case of an audio signal) is divided into a right output and a left output by a multiplexer 52, which are reproduced by speakers 56R and 56L, respectively, by way of right and left amplifiers 54R and 56L, respectively.

The output signal from the intermediate amplifying circuit 48 is compared with a threshold value for that signal by a comparator 58, the threshold value being set such that comparator 58 supplies a trigger output for inverting the output of the flip-flop circuit when the reception sensitivity of the front windshield antenna 32 or of the pair of high-frequency pick-ups 34a, 34b falls below a predetermined value. The comparator 58 compares the threshold value with the signal which is supplied by the intermediate frequency amplifying circuit 46 when broadcast waves are received by the antenna 32 or the high-frequency pick-ups 34a, 34b, and when the signal falls below the threshold value, a trigger signal is supplied to the flip-flop circuit 44 to invert the output thereof.

The inversion of the output causes the switch circuit 40 to change over from the present antenna to an antenna enjoying better reception sensitivity from among the front windshield antenna 32 and the pair of high-frequency pick-ups 34a, 34b.

In this way, the two high-frequency pick-ups 34a, 34b provided at the sides of the rear edge of the roof panel and the front windshield antenna 32 constitute a space velocity reception antenna, and automatic changeover to the antenna enjoying better reception sensitivity is constantly enabled.

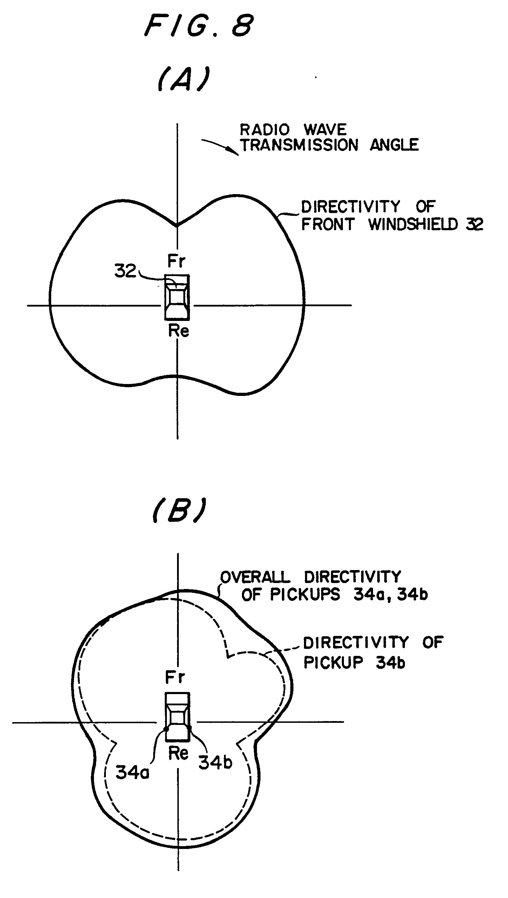

The directivity of the front windshield antenna 32 is approximately non-directional, as is shown in Fig. 8(A), and the directivity of the high-frequency pick-up provided on the righthand end of the rear edge of the roof panel of the vehicle body is as is indicated by the broken line in Fig. 8(B), but the overall directivity of the right and left pick-ups is approximately non-directional, as is indicated by the solid line in Fig. 8(B). Therefore, space diversity reception is enabled by the two antennas consisting of the front windshield antenna 32 and the pair of high-frequency pick-ups 34a, 34b, thereby substantially preventing any deterioration of reception sensitivity in a specific direction.

Figs. 9 and 10 show an arrangement for mounting the high-frequency pick-ups 34a and 34b to the roof panel of the vehicle body.

A roof structure 60 is exposed in Fig. 9, and the metallic structure 60 serves to mount a rear window glass 64 by means of a rear window frame 62. In this example, each high-frequency pick-up 34 is disposed within a distance of 4.5 cm inward of the outer edge of the rear window frame 62.

As is shown in detail in Fig. 10, each high-frequency pickup 34a, 34b includes a metallic casing 66 which shields a loop antenna 68 provided therewithin from external magnetic flux, thereby constituting an electromagnetic coupling type pick-up and having a structure similar to the above-described probe which includes a loop coil.

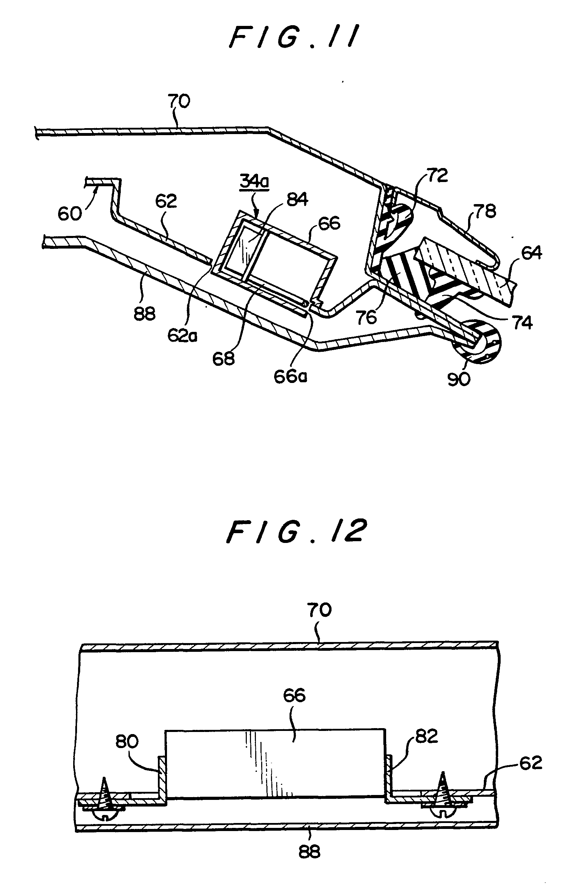

Fig. 11 is a cross sectional view of the high-frequency pick-up 34a secured to the roof structure 60. The roof structure 60 includes a roof panel 70, and the rear window frame 62 is secured to one end of the roof panel 70. The rear window glass 64 is secured to the roof panel 70 by a fastener 72 and a dam 74, these two being tightly bonded by an adhesive 76.

A molding 78 is fixed between the roof panel 70 and the rear window glass 64.

An opening 62a is provided in a part of the rear window frame 62 in order that the casing 66 of the high-frequency pick-up 34a may be inserted into the opening 62a, whereby a side of the loop antenna 68 of the high-frequency pick-up 34a faces the edge of the opening 62a.

As shown in Fig. 11, a side of the loop antenna 68 housed in the casing 66 faces the marginal edge of the opening in the rear window frame 62 in proximity thereto. Therefore, the magnetic flux induced by the high-frequency surface currents and flowing at the marginal edge portion of the rear window frame 62 is positively received by the loop antenna 68, which is safely shielded from external flux by the casing 66, so that the currents induced on the vehicle body can be detected with good sensitivity by the high-frequency pick-up 34a.

In order to exactly locate and fix the casing 66 of the high-frequency pick-up 34a in relation to the rear window frame 62, L-shaped brackets 80, 82 are attached to both ends of the casing 66 by bolts or the like, as shown in Fig. 12, and the brackets 80, 82 are screwed to the rear window frame 62.

The casing 66 of the high-frequency pick-up 34a is provided with circuitry 84 therewithin, which is connected to the loop antenna 68 and is provided with a pre-amplifier and the like for processing a detected signal. The high-frequency signal obtained in this way is conducted away by the coaxial cable 36a and is processed by the diversity reception circuit shown in Fig. 7. A power source and a signal for controlling the circuit is supplied by a cable 86 to the circuitry 84.

The loop antenna 68 is in the form of a single wound coil which is covered with insulation such that the coil can be arranged in an electrically insulated relationship with and closely adjacent the marginal edge portion of the rear window frame 62. Thus, the magnetic flux induced by the surface currents can interest the loop antenna 68 with an increased intensity.

After the high-frequency pick-up 34a is secured to the exposed roof structure 60, in particular, to the rear window frame 62 in this manner, a roof garnish 88 is secured to the roof structure 60, and an edge molding 90 is fixed over the edges of the roof garnish 88 and the rear window frame 62.

The side of the loop antenna 68 exposed from the casing 66 is disposed within a distance of 4.5 cm from the outer marginal edge of the rear window frame 62, whereby the FM broadcast waves of a frequency of 80 MHz can be positively detected from the surface currents flowing on the marginal edge portion of the rear window frame 62 of the vehicle body. Since the surface currents flow along the marginal edge portions of the vehicle body, as shown in Fig. 6, the loop antenna 68 is longitudinally disposed along the marginal edge portion of the rear window frame 62.

As described above, according to this embodiment, the surface currents flowing at the marginal edge portions of the vehicle body, in particular, at the marginal edge portion of the roof panel, are electromagnetically detected by the high-frequency pick-ups, and positive reception in the high-frequency bands is enabled without any external exposure of the high-frequency pick-ups. Thus these pick-ups are very useful in a space diversity antenna system. In addition, since they do not project outwardly from the vehicle body unlike a pole antenna, they do not damage the aesthetic appearance of the vehicle body, and can be easily attached after the completion of the vehicle body assembly.

Second embodiment

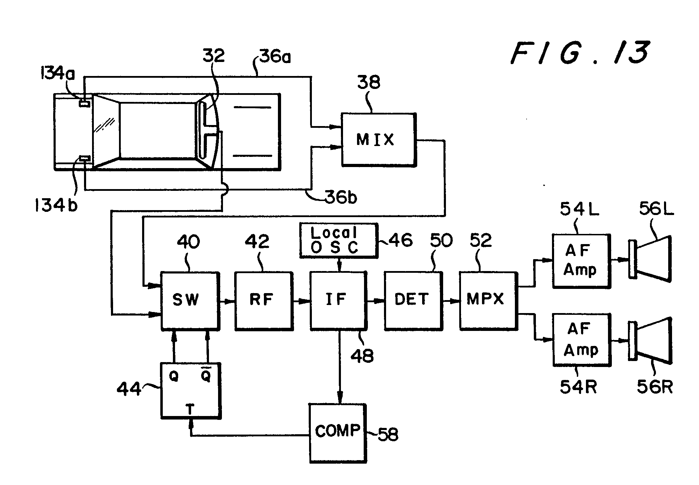

A second embodiment of the present invention is shown in Fig. 13.

This embodiment includes high-frequency pick-ups 134a, 134b similar to those explained in the first embodiment disposed one at each side of the front marginal edge portion of the trunk lid of the vehicle body thereby constituting a space diversity antenna together with a front windshield antenna.

In Fig. 13, other parts of the structure are the same as those shown in the first embodiment, like reference numerals denoting like elements and their explanation being omitted.

The characteristics of the front windshield antenna 32 and the high-frequency pick-ups 134a, 134b are also substantially the same as the characteristics of those in the first embodiment shown in Fig. 8, their explanation being also omitted.

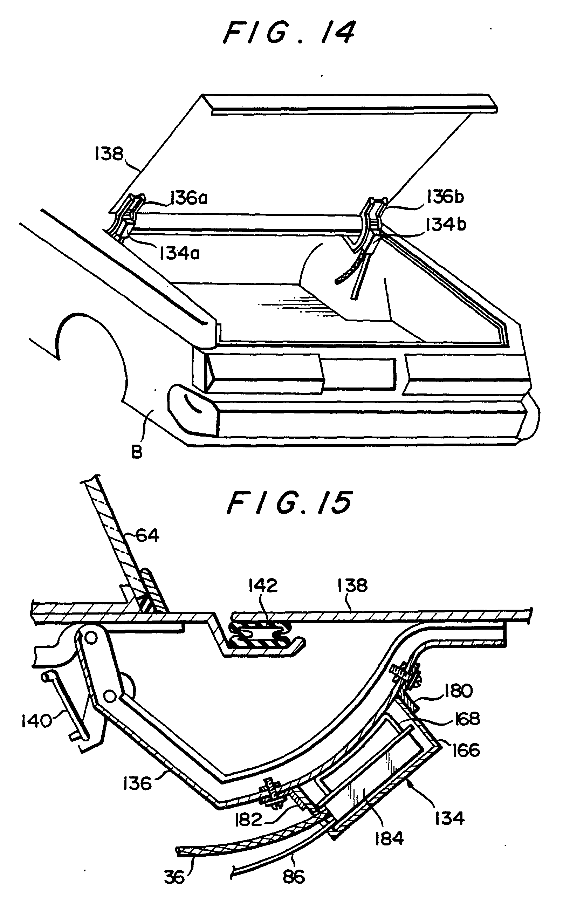

Figs. 14 to 16 illustrate an embodiment in which the high-frequency pick-ups are attached to hinges which connect the trunk lid and the vehicle body so that the surface currents concentrated on each hinge with high density are picked up by the high frequency pick-ups.

Since the trunk hinges are situated well away from the engine and are not likely to be greatly influenced by the noise of the vehicle, the detected currents can provide a good detection value with a superior S/N ratio.

Fig. 14 shows a first manner of attachment in which the high-frequency pick-ups in this embodiment are secured to the trunk hinges, and Fig. 15 shows it in detail. Each high-frequency pick-up 134 is an electromagnetic coupling type pick-up, and has a structure similar to that of the above-described probe which is used for detecting the distribution of the surface currents on the vehicle body and which includes a loop coil.

The trunk hinge 136 with one end thereof rotatably supported by the vehicle body and the other end secured to the trunk lid 138 rotatably supports the trunk lid 138.

A torsion bar 140 is provided on the end of the trunk hinge 136 which is rotatably supported by the vehicle body, so as to control the degree of opening of the trunk lid 138 when it is opened. As is known, a water sealing weather strip 142 is provided between the trunk lid 138 and the vehicle body, thereby preventing the ingress of rainwater from the rear window glass 64.

Each high-frequency pick-up 134 is longitudinally fixed on the outer surface of the trunk hinge 136, namely on the side facing the trunk space, in such a manner that the longitudinal side of a loop antenna 168 provided within the high-frequency pick-up 134 is disposed parallel to the longitudinal side of the trunk hinge 136. In this way, the loop antenna 168 can positively catch the surface currents flowing on the trunk hinge 136 with high efficiency.

Each high-frequency pick-up 134 includes a casing 166 formed of conductive material. The casing 166 is provided with the loop antenna 168 and circuitry 184 containing a pre-amplifier and the like therewithin, and the opening of the casing 166 faces the trunk hinge 136. L-shaped brackets 180, 182 are secured to the ends of the casing 166, and one end of each of the L-shaped brackets 180, 182 is firmly screwed to the trunk hinge 136. Therefore, it will be understood that the magnetic flux which is induced by the high-frequency surface currents flowing on the trunk hinge 136 is alone introduced into the casing 166, and the antenna 168 is safely shielded from external magnetic flux by the casing 166.

The loop antenna 168 is preferably provided along the trunk hinge 136, and is preferably provided in a form which is in conformity with the curvature of the hinge 136.

The power source and a signal for controlling the circuit is supplied from the cable 86 to the circuitry 184, and the high-frequency detection signal supplied by the loop antenna 168 is conducted away by the coaxial cable 36 and is processed by the circuit shown in Fig. 13.

The loop antenna 168 is in the form of a single wound coil which is covered with insulation such that the coil can be arranged in an electrically insulated relationship with and closely adjacent to the trunk hinge 136. Thus, the magnetic flux induced by the surface currents can intersect the loop antenna 168 with an increased intensity.

As described above, in this embodiment, surface currents are detected by the high-frequency pick-ups from the trunk hinges. In this manner, secure reception in the high-frequency bands is enabled without any external exposure of the antenna system, and a very useful automobile antenna system is thus provided.

Another manner of attachment of the pick-ups is shown in Fig. 16. This embodiment is approximately the same as that shown in Fig. 15 and is different only in that each high-frequency pick-up 132 is disposed at the back of the trunk hinge 136. The high-frequency pick-up 132 is an electromagnetic coupling type pick-up, and is provided with the loop antenna 168 and the circuitry 184 therewithin. The pick-up 132 is firmly secured to the back of the trunk hinge 136 by the L-shaped brackets 180, 182.

According to this manner of attachment, the high-frequency pik-up 134 does not project into the trunk space from the trunk hinge 136, and thereby advantageously does not come into contact with or damage baggage or the like placed within the trunk.

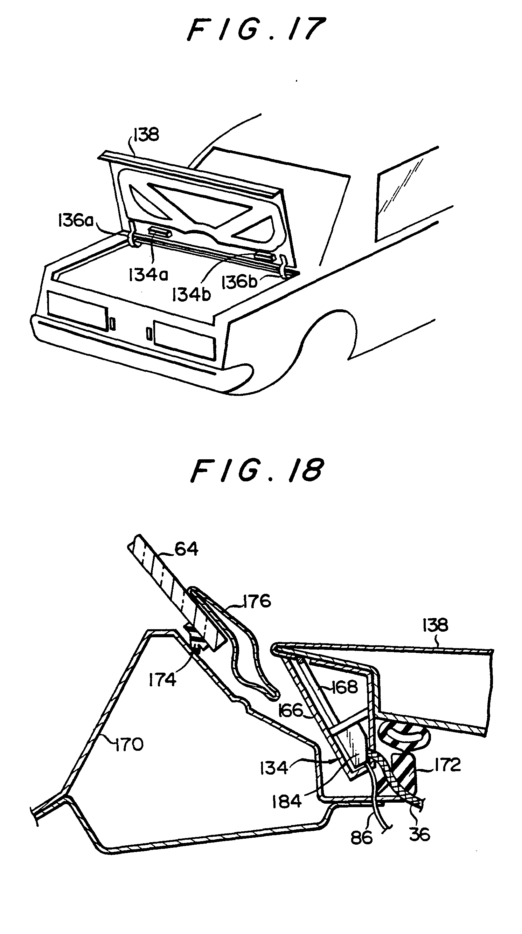

Figs. 17 and 18 show still another manner of attachment of the high-frequency pick-up to the marginal edge portion of the trunk lid 138.

In Fig. 18, a water sealing weather strip 172 is provided between the trunk lid 138 and a rear tray panel 170 in order to prevent the ingress of rainwater and the like.

A dam 174 is inserted between the rear window glass 64 and the rear tray panel 170 for sealing them in order to prevent rainwater, noise, and the like from entering at this point, and a molding 176 is provided at the lower end of the outer surface of the rear window glass 176.

This example is characterized in that each high-frequency pickup 134 is secured to the marginal edge portion of the trunk lid 138 which faces the rear tray panel 170. The loop antenna 168 provided within the pickup 134 is disposed in such a manner that a longitudinal side thereof is parallel to the longitudinal edge of the trunk lid 138. The side of the loop antenna 168 is disposed within a distance of $12 \times 10^{-3}$ c/f (m), namely within a distance of 4.5 cm when receiving FM broadcast waves of a frequency of 80 MHz, and thereby the surface currents concentrated on the marginal edge portion of the trunk lid 138 can be caught positively and with high efficiency by the loop antenna 168.

As described above, since the high-frequency surface currents are detected by high-frequency pick-ups disposed inside the trunk lid in this example, a space diversity antenna is constituted without any external exposure of the high-frequency pick-ups.

Third embodiment

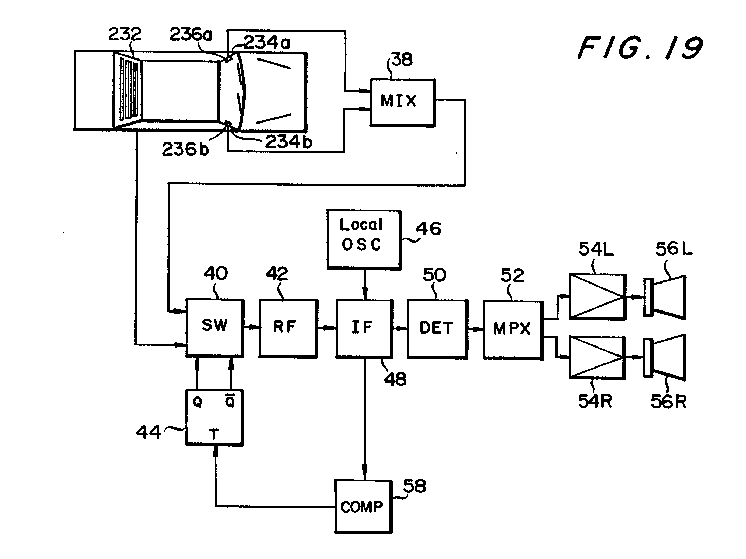

Fig. 19 shows a third embodiment of the present invention.

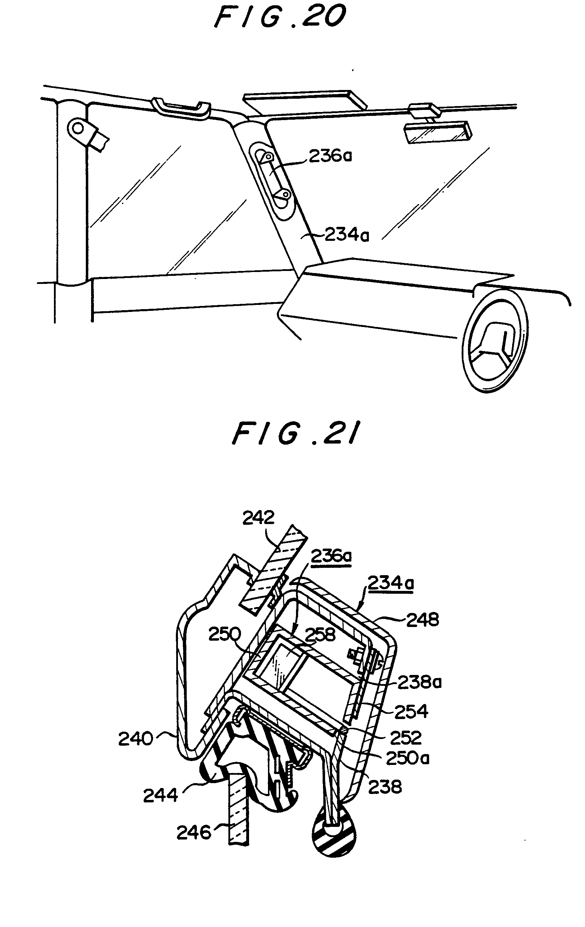

This embodiment includes high-frequency pick-ups 236a, 236b, similar to those described above, provided within hollow front pillars 234a, 234b, respectively, of the vehicle body so as to constitute a space diversity antenna together with a rear windshield antenna 232. The structure and a method of attachment of one (234a) of the high-frequency pick-ups 234a, 234b will be explained with reference to Figs. 20 to 22.

As is clear from the cross sectional view in Fig. 21, the pillar 234 includes hollow prism as its main pillar and a pedestal plate 238 provided on the hollow prism. A windshield molding 240 is secured to the side surface of the pedestal plate 238 which faces the exterior of the vehicle body, and the front window glass 242 is retained by the molding 240.

A weather strip rubber 244 is secured to the surface of the pedestal plate 238 which faces the rear portion of the vehicle body, thereby maintaining the sealed state of the joint between a window glass and the pedestal plate 238.

Furthermore, a front pillar garnish 248 is mounted on the surface of the pedestal plate 238 which faces the interior of the vehicle body, so as to maintain the aesthetically pleasing appearance of the pillar by enclosing the surface of the pedestal plate 238.

In this embodiment, the high-frequency pick up 236a of an electromagnetic coupling type is disposed in the longitudinal direction of the front pillar 234a in such a manner that the pick-up 236a is inserted into the hollow portion of the pedestal plate 238.

The high-frequency pick-up 236a is composed of a casing 250 of conductive material and a loop antenna 252 provided therewithin, as seen in Figs. 21 and 22. The casing 250 for shielding the loop antenna from external electromagnetic fields is provided with an opening 250a at one side thereof. One side of the loop antenna 252 is exposed at the opening 250a and is disposed in proximity to the pillar, in particular, the pedestal plate 238, where high-frequency surface currents concentratedly flow.

An opening 238a is provided at a part of the pedestal plate 238, in order that the high-frequency pick-up 236a can be inserted into the hollow pillar through the opening 238a before the front pillar garnish 248 is secured.

In order to secure the casing 250 of the high-frequency pick-up 236a to the pedestal plate 238, brackets 254, 256 are fixed to the ends of the casing 250 by spot welding or the like, and the brackets 254, 256 are tightly screwed to the pedestal plate 238, as shown in Fig. 22.

Accordingly, a side of the loop antenna 252 in this fixed state is so disposed as to be closely adjacent and face an edge of the opening 238a of the pedestal plate 238, and the magnetic flux induced by the high-frequency surface currents which are concentrated and flowing on the pedestal plate 238 effectively intersect the loop antenna 252.

A circuitry 258 including a pre-amplifier and the like is housed behind the loop antenna 252 in the casing 250. Power and a signal for controlling the circuit is supplied from a cable 260 to the circuitry 258, and the high-frequency detection signal from the loop antenna 252 is conducted away by a coaxial cable 262 and is processed by a circuit similar to that used for examining distribution of surface currents.

The loop antenna 252 is in the form of a single wound coil which is covered with insulation such that the coil can be arranged in an electrically insulated relationship with and closely adjacent to the pillar pedestal plate 238. Thus, the magnetic flux induced by the surface currents concentratedly flowing on the pedestal plate 238 can intersect the loop antenna 252 with good efficiency.

After the high-frequency pick-up 236a is inserted into the front pillar 234a in this way, the front pillar 234a is covered with the front pillar garnish 248. Thus the structure of the front pillar 234a is precisely the same as an ordinary pillar in terms of external appearance.

The high-frequency pick-up 236b similar to the pick-up 236a is provided at the other front pillar 234b, as shown in Fig. 19, and since the structure and the method of attaching it is the same as those of the high-frequency pick-up 236a, explanation thereof will be omitted.

The outputs of the high-frequency pick-ups 236a, 236b provided on the front pillars 234a, 234b, respectively, are added together. In this way, the high-frequency pick-ups 236a, 236b in combination constitute a sub-antenna, and constitute a space diversity reception antenna together with the rear windshield antenna 232.

The diversity reception circuit for supplying the output of the rear windshield antenna 232 and adding the outputs of the high-frequency pick-ups 236a, 236b together is the same as that shown in Fig. 7, like reference numerals being provided for like elements and their explanation being omitted.

As described above, according to the embodiment, the high-frequency pick-ups 236a, 236b attached within the front pillars 234a, 234b, respectively, and the rear windshield antenna 232 constitute a space diversity reception antenna, and automatic changeover to the antenna enjoying superior reception is constantly enabled.

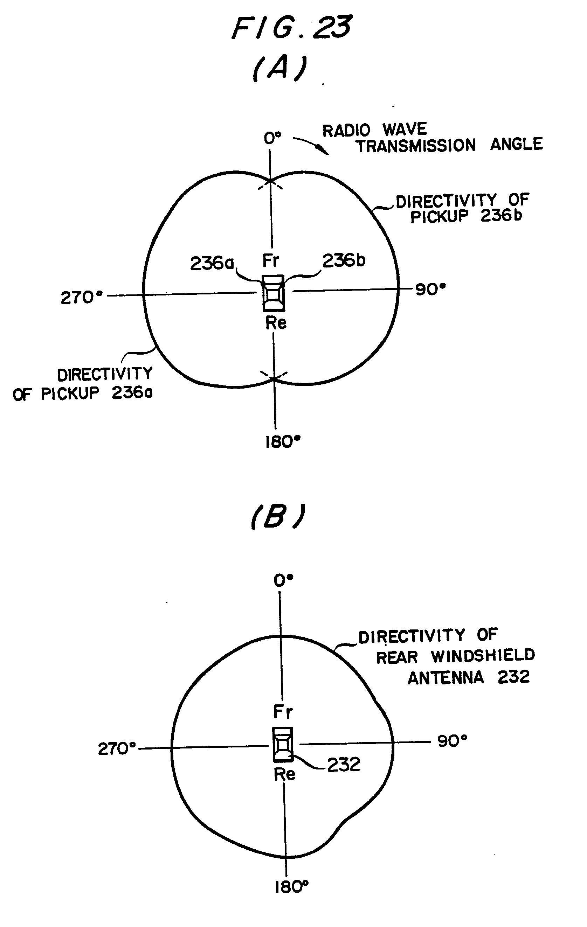

This structure makes the directivity of the high-frequency pick-ups 234a, 234b which are attached within the front pillars 234a, 234b, respectively, approximately non-directional, as shown in Fig. 23(A), and since the rear windshield antenna 232 is approximately non-directional, as shown in Fig. 23(B), the two non-directional antennas consisting of the rear windshield antenna 232 and the pair of high-frequency pick-ups 236a, 236b enable space diversity reception, thereby substantially preventing any deterioration of the reception sensitivity in a specific direction.

In addition, since, in this invention, no antenna projects outwardly as in the case of a pole antenna, they do not damage the aesthetic appearance and can be easily attached after the completion of the vehicle body assembly.

## Claims

1. A space diversity automobile antenna system comprising:

a plurality of antenna means (32, 232; 34, 134, 236) associated with the automobile to detect broadcast radio frequency signals, at a frequency above 50 MHz, and to provide output signals;

said plurality of antenna means including a windshield antenna (32, 232); and

a diversity reception circuit (40) operable in response to a change in the level of a said output signal to select one of said output signals for use; characterized in that:

· said plurality of antenna means further includes a pair of pick-ups (34a, 34b; 134a, 134b; 236a, 236b) disposed nearer the end of the automobile body remote from the windshield antenna (32, 232) and disposed one toward each side of said body;

each said pick-up being mounted adjacent a structure (62, 138, 136, 238) forming a portion of said body to detect radio frequency surface currents induced in said structure by the broadcast radio frequency signals; and

each said pick-up comprising a casing (66, 166, 250) having an opening (66a, 250a) and a loop antenna (68, 168, 252) disposed within the casing with a side thereof exposed through said opening to extend closely adjacent to a predetermined surface portion of said structure (62, 138, 136, 238) along which said surface currents have a concentrated flow.

2. A system according to Claim 1 characterized in that said windshield antenna (32) is associated with the front windshield.

3. A system according to Claim 2, characterized in that said pair of pick-ups (34a, 34b) are mounted adjacent the rear marginal edge portion of the automobile roof panel (70), one being disposed at each side of said rear marginal edge portion.

4. A system according to Claim 3 characterized in that each said pick-up (34a, 34b) is mounted to a rear windshield window frame (62) and is received and located in an opening (62a) in said frame with the exposed side of said loop antenna (68) extending parallel to and facing a metal edge of said opening.

5. A system according to Claim 2 characterized in that said pair of pick-ups (134a, 134b) are mounted on the forward marginal edge portion of the automobile trunk lid (138), one being disposed at each side of said marginal edge portion.

6. A system according to Claim 2, characterized in that said pair of pick-ups (134a, 134b) are mounted one each on left and right side hinges (136a, 136b) for the trunk lid (138) of the automobile body.

7. A system according to Claim 1 characterized in that said windshield antenna (232) is associated with the rear windshield.

8. A system according to Claim 7 characterized in that said pair of pick-ups (236a, 236b) are mounted one each within left and right side hollow front pillars (234a, 234b) of the automobile body.

9. A system according to any one of Claims 1 to 8, characterized by a mixer (38) for adding together the respective signals supplied by said pair of pick-ups (34a, 34b; 134a, 134b; 236a, 236b) to form a said output signal, and said diversity reception circuit (40) being operable in response to a change in the level of a said output signal to select for use either the output signal from the windshield antenna (32, 232) or the output signal from said mixer (38).

## Patentansprüche

1. Raumdiversity-Antennensystem für Kraftfahrzeuge mit einer Vielzahl von Antenneneinrichtung (32, 232; 34, 134, 236), die dem Kraftfahrzeug zugeordnet sind und gesendete Hochfrequenzsignale mit einer Frequenz über 50 MHz erfassen sowie Ausgangssignale vorsehen;

wobei die Vielzahl der Antenneneinrichtungen eine Windschutzscheibenantenne (32, 232) umfaßt; und

einer Diversity-Empfangsschaltung (40), die in Abhängigkeit von einer Änderung im Niveau des Ausgangssignales eines der Ausgangssignale zur Nutzung auswählt; dadurch gekennzeichnet, daß die Vielzahl der Antenneneinrichtungen desweiteren ein Paar von Aufnehmern (34a, 34b; 134a, 134b; 236a, 236b) umfaßt, die näher an dem von der Windschutzscheibenantenne (32, 232) entfernten Ende der Kraftfahrzeugkarosserie und jeweils einer zu einer Seite der Karosserie gerichtet angeordnet sind;

jeder Aufnehmer benachbart zu einem Teil (62, 138, 136, 238) montiert ist, das einen Abschnitt der Karosserie bildet, um Hochfrequenzoberflächenströme zu erfassen, die durch die gesendeten Hochfrequenzsignale in dem Teil induziert werden; und

jeder Aufnehmer ein Gehäuse (66, 166, 250) mit einer Öffnung (66a, 250a) und eine derart im Gehäuse angeordnete Schleifenantenne (68, 168, 252) umfaßt, daß eine Seite der Antenne durch die Öffnung freiliegt und sich eng benachbart zu einem vorgegebenen Flächenabschnitt des Teiles (62, 138, 136, 238), entlang dem die Oberflächenströme einen konzentrierten Fluß besitzen, erstreckt.

2. System nach Anspruch 1, dadurch gekennzeichnet, daß die Windschutzscheibenantenne (32) der vorderen Windschutzscheibe zugeordnet ist.

3. System nach Anspruch 2, dadurch gekennzeichnet, daß das Paar Aufnhmer (34a, 34b) benachbart zu dem hinteren Grenzrandabschnitt der Dachplatte (70) des Kraftfahrzeuges montiert ist, wobei sich jeweils ein Aufnehmer auf jeder Seite des hinteren Grenzrandabschnittes befindet.

4. System nach Anspruch 3, dadurch gekennzeichnet, daß jeder Aufnehmer (34a, 34b) an einem hinteren Windschutzscheibenrahmen (62) montiert und in einer Öffnung (62a) des Rahmens aufgenommen und angeordnet ist, wobei sich die freiliegende Seite der Schleifenantenne (68) parallel zu einem Metallrand der Öffnung erstreckt und auf diesen weist.

5. System nach Anspruch 2, dadurch gekennzeichnet, daß das Paar Aufnehmer (134a, 134b) am vorderen Grenzrandabschnitt des Kofferraumdeckkels (138) des Kraftfahrzeuges montiert ist, wobei sich jeweils ein Aufnehmer auf jeder Seite des Grenzrandabschnittes befindet.

6. System nach Anspruch 2, dadurch gekennzeichnet, daß das Paar Aufnehmer (134a, 134b) an einem linksseitigen und rechtsseitigen Scharnier (136a, 136b) für den Kofferraumdeckel (138) der Kraftfahrzeugkarosserie montiert ist.

7. System nach Anspruch 1, dadurch gekennzeichnet, daß die Windschutzscheibenantenne (232) der hinteren Windschutzscheibe zugeordnet ist.

8. System nach Anspruch 7, dadurch gekennzeichnet, daß das Paar Aufnehmer (236a, 236b) innerhalb eine linksseitigen und rechtsseitigen vorderen Hohlpfeilers (234a, 234b) der Kraftfahrzeugkarosserie angeordnet ist.

9. System nach einem der Ansprüche 1 bis 8, gekennzeichnet durch einen Mischer (38) zum Addieren der entsprechenden, von dem Paar Aufnehmer (34a, 34b; 134a, 134b; 236a, 236b) gelieferten Signale zur Erzeugung des Ausgangssignales und dadurch, daß die Diversity-Empfangsschaltung (40) in Abhängigkeit von einer Änderung des Niveaus des Ausgangssignals entweder das Ausgangssignal von der Windschutzscheibenantenne (32, 232) oder das Ausgangssignal vom Mischer (38) zur Nutzung auswählt.

**Revendications**

1. Système d'antenne d'automobile à diversité en espace, comprenant:

une pluralité de moyens d'antenne (32, 232; 34, 134, 236) associés à l'automobile en vue de capter des signaux de fréquence radio, d'une fréquence supérieure à 50 MHz et de donnerdes signaux de sortie;

ladite pluralité de moyens d'antenne comportant une antenne de pare-brise ou de vitre arrière (32, 232);

et un circuit de réception (40) à diversité en espace que l'on peut faire fonctionner en réponse à un changement du niveau dudit signal de sortie en vue de choisir un desdits signaux de sortie dans le but de l'utiliser; caractérisé en ce que:

ladite pluralité de moyens d'antenne comprend en outre une paire de capteurs (34a, 34b; 134a, 134b; 236a, 236b) qui sont placés plus près de l'extrémité de la caisse située à l'écart de l'antenne de pare-brise ou de vitre arrière (32, 232) et disposés chacun d'un côté de ladite caisse;

chacun desdits capteurs étant monté à proximité d'une structure (62, 138, 136, 238) formant une partie de ladite caisse en vue de détecter les courants de surface de fréquence radio induits dans ladite structure par les signaux de fréquence radio provenant des émetteurs;

et chacun desdits capteurs comprenant un boîtier (66, 166, 250) comportant une ouverture (66a, 250a) et une antenne en forme de boucle ou cadre (68, 168, 252), disposée à l'intérieur du boîtier, une de ses branches étant exposée via ladite ouverture en vue d'être en une position tout contre une partie de surface prédéterminée de ladite structure (62, 138, 136, 238) le long de laquelle lesdits courants de surface présentent une haute intensité.

2. Système selon la revendication 1, caractérisé en ce que ladite antenne (32) de pare-brise ou de vitre arrièe est associée au pare-brise.

3. Système selon la revendication 2, caractérisé en ce que ladite paire de capteurs (34a, 34b) est montée à proximité de la partie marginale du bord arrière du panneau (70) de toit de l'automobile, chacun de ceux-ci étant disposé sur un côté de ladite partie marginale de bord arrière.

4. Systéme selon la revendication 3, caractérisé en ce que chacun desdits capteurs (34a, 34b) est monté sur un cadre (62) de fenêtre de vitre arrière et qui se trouve logé dans une ouverture (62a) pratiquée dans ledit cadre, la branche exposée de ladite antenne en boucle (68) étant allongée parallèlement au bord métallique de ladite ouverture en face duquel elle est située.

5. Système selon la revendication 2, caractérisé en ce que les capteurs (134a, 134b) de ladite paire sont montés sur la partie marginale avant du bord du couvercle (138) du coffre de l'automobile, chacun de ceux-ci étant disposé sur un côté de ladite partie marginale de bord.

6. Système selon la revendication 2, caractérisé en ce que les capteurs (134a, 134b) de ladite paire sont montés chacun sur une charnière (136a, 136b), à gauche ou à droite, du couvercle (138) de coffre de la caisse d'automobile.

7. Système selon la revendication 1, caractérisé en ce que ladite antenne (232) de pare-brise ou de vitre arrièe est associée à la vitre arrière.

8. Système selon la revendication 7, caractérisé en ce que les capteurs (236a, 236b) de ladite paire sont montés chacune dans un montant avant creux, à la gauche ou à la droite, de la caisse d'automobile.

9. Système selon l'une quelconque des revendications 1 à 8, caractérisé par un circuit mélangeur (38) destiné à additionner les signaux respectifs fournis par ladite paire de capteurs (34a, 34b; 134a, 134b; 236a, 236b) pour former un dit signal de sortie; ledit circuit (40) de réception à diversité en espace pouvant fonctionner en réponse à un changement du niveau dudit signal de sortie en vue de sélectionner, pour l'utiliser, soit le signal de sortie provenant de l'antenne de pare-brise ou de vitre arrière (32, 232), soit le signal de sortie provenant dudit circuit mélangeur (38).

# F I G . 1

# F I G . 2

# FIG. 3

# FIG. 4

# F/G.5

# F/G.6

FIG. 7

# FIG. 8

## (A)

RADIO WAVE
TRANSMISSION ANGLE

DIRECTIVITY OF
FRONT WINDSHIELD 32

Fr

32

Re

## (B)

OVERALL DIRECTIVITY
OF PICKUPS 34a, 34b

DIRECTIVITY OF
PICKUP 34b

Fr

Re 34b

34a

## F I G . 9

## F I G . 10

# F I G . 11

# F I G . 12

7

EP 0 191 233 B1

FIG.13

## F I G . 14

## F I G . 15

EP 0 191 233 B1

# FIG. 16

# FIG. 17

# FIG. 18

FIG. 19

# FIG.20

# FIG.21

# F I G . 22

# FIG. 23
## (A)

RADIO WAVE TRANSMISSION ANGLE

DIRECTIVITY OF PICKUP 236b

0°

236a   Fr   236b

270°   90°

Re

180°

DIRECTIVITY OF PICKUP 236a

## (B)

0°

DIRECTIVITY OF REAR WINDSHIELD ANTENNA 232

Fr

270°   90°

232

Re

180°